# EUROPÄISCHE PATENTANMELDUNG

(11) **EP 1 886 970 A2**
(43) Veröffentlichungstag der Anmeldung: **13.02.2008**
(21) Anmeldenummer: 07014490.2
(22) Anmeldetag: 24.07.2007
(51) Int. Cl.: C01B 13/11, F24F 3/16

(54) **Vorrichtung und/oder Anordnung zur Vermeidung von Ablagerungen von insbesondere Ammoniumnitrat**

(30) Priorität: 03.08.2006 DE 202006011916 U
(71) Anmelder: Petz industries GmbH & Co. KG, 90439 Nürnberg (DE)
(72) Erfinder: Rolf Petz, 90439 Nürnberg. (DE)
(74) Vertreter: Pätzold, Herbert

(57) **Zusammenfassung**

Vorrichtung und / oder Anordnung zur Vermeidung von Ablagerungen von insbesondere Ammoniumnitrat mit einem Ozonerzeugungsmittel und einem Heizmittel, die relativ derart zueinander und innerhalb eines Luftstroms LS eines Geräts angeordnet sind, daß zumindest ein Teilbereich einer Oberfläche des Ozonerzeugungsmittels und / oder die Umgebungsluft des Ozonerzeugungsmittels derart mittels dem Heizmittel aufgeheizt ist, daß Ablagerungen von insbesondere Ammoniumnitrat auf der Oberfläche des Ozonerzeugungsmittels vermieden sind. Das Ozonerzeugungsmittel umfasst ein Ozonmodul, das nach der Funktion der dielektrisch behinderten elektrischen Entladung arbeitet. Das Ozonmodul umfasst außerdem das Heizmittel.

## Beschreibung

Die vorliegende Erfindung betrifft eine Vorrichtung und / oder Anordnung zur Vermeidung von Ablagerungen von insbesondere Ammoniumnitrat auf einem Ozonerzeugungsmittel und insbesondere auf einem Ozonmodul zur Erzeugung eines Plasmas zur Herstellung von Ozon insbesondere für ein Luftaufbereitungsgerät und insbesondere für ein Luftreinigungsgerät.

In Luftreinigungsgeräten kommen vielfach Ozonmodule zum Einsatz, die nach der Funktion der dielektrisch behinderten elektrischen Entladung arbeiten.

Ein derartiges Ozonmodul ist beispielsweise aus der WO 01/ 02291 bekannt und umfaßt einen flachen elektrisch isolierenden Träger mit einer ersten vorbestimmten Dielektrizitätskonstante, auf dessen Oberseite eine elektrische Isolierschicht aus einem dielektrischen Material mit einer zweiten vorbestimmten Dielektrizitätskonstante angebracht ist. Die Differenz der Dielektrizitätskonstanten des Trägers und der Isolierschicht ist so gewählt, dass sich der Effekt von Spiegelentladungen einstellt. Auf Unter- und Oberseite des Trägers sind jeweils Elektroden aus elektrisch leitfähigem Material angebracht, und an die beiden Elektroden ist eine Hochspannung von einigen kV eines Wechselspannungsgenerators angelegt.

Ein gegenüber dem aus der WO 01/02291 bekannten Ozonmodul 1 modifiziertes Ozonmodul kann beispielsweise einen isolierenden Träger 10 umfassen, auf dessen Ober- und Unterseite jeweils eine obere und untere Elektrode 11 aufgebracht ist, und wobei die Elektroden 11 jeweils mit einer Isolierschicht 12 bedeckt sein können.

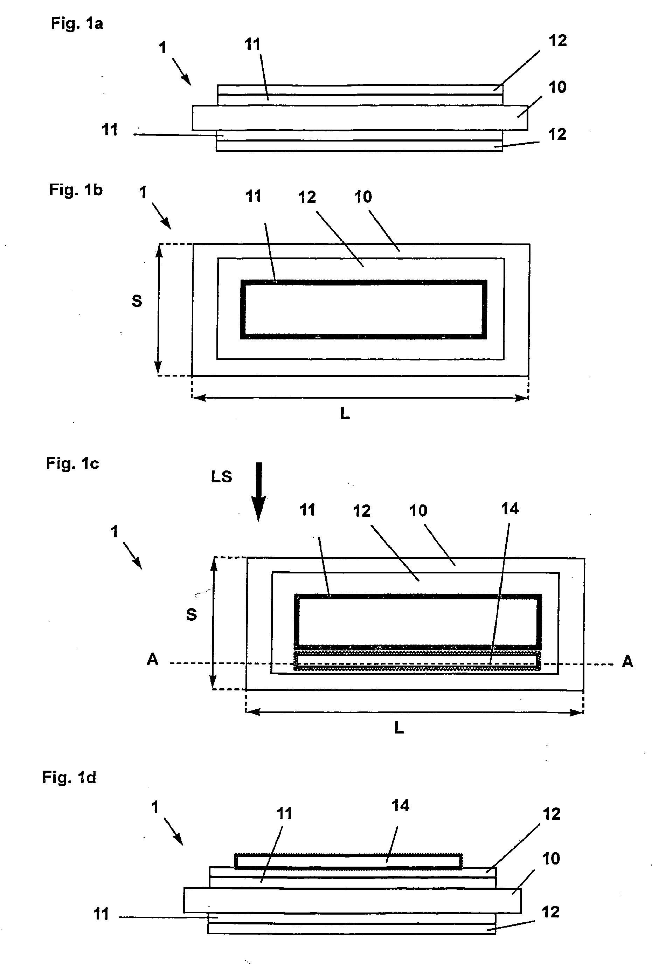

Fig. 1a zeigt eine schematische Darstellung eines derartigen herkömmlichen Ozonmoduls 1 mit einem isolierenden Träger 10, einer oberen Elektrode 11 und einer flächenhaft ausgebildeten unteren Elektrode 11 und mit einer oberen und unteren Isolierschicht 12 in Seitenansicht.

Fig. 1 b zeigt eine schematische Draufsicht auf das Ozonmodul 1 von Fig. 1 a, wobei das Ozonmodul 1 insbesondere eine etwa rechteckige Geometrie mit einer Schmalseite S und einer Längsseite L aufweisen kann, wobei die Längsseite L deutlich größer als die Schmalseite S ist.

Bei der vorliegenden Erfindung wurde jedoch festgestellt, daß beim Betrieb eines vorstehend beschriebenen Ozonmoduls 1 oder eines aus dem Stand der Technik nach der WO 01/02291 bekannten Ozonmoduls bei der Ozonproduktion durch Elektronenstoß nach der formalen Reaktionsgleichung

3 O₂ -> 2 O₃

insbesondere in einem Luftaufbereitungsgerät und insbesondere in einem Luftreinigungsgerät und insbesondere in einem Luftstrom LS jedoch unerwünschte Nebenreaktionen auftreten, und insbesondere eine Bildung von Ammoniumnitrat erfolgt.

Analog der Ozonbildung werden durch Elektroneneinfang aus Stickstoff Stickstoffradikale sowie OH- und H-Radikale aus gasförmigem Wasser gebildet. Kombination dieser Radikale führt nach formaler Reaktionsgleichung

2 N₂ + 2 H₂O -> NH₄NO₂

zur Bildung von Ammoniumnitrit, das durch Ozon spontan zu Ammoniumnitrat oxidiert wird.

NH₄NO₂ + O₃ -> NH₄NO₃ + O₂

Die Bildung dieser Stoffe geschieht in der Gasphase in unmittelbarer Nähe der Ozonerzeugung und damit in örtlicher Nahe der elektrischen Entladungen. Obwohl die Produktionsrate dieser Stoffe gering ist, kommt es im Laufe der Zeit zu relevanten Abscheidungen auf dem Ozonmodul 1. Dieser Vorgang entspricht einer Kristallisation eines Feststoffes an einer kalten Oberfläche aus der Gasphase.

Der auskristallisierte Feststoff, überwiegend Ammoniumnitrat, ist feinkristallin mit großer Oberfläche. Im Folgeprozess werden weitere Stoffe aus der Luft an dem Feststoff adsorbiert sowie Staubpartikel filterartig eingefangen. Damit belegt sich die Oberfläche des Ozonmoduls 1 mit einer elektrisch leitfähigen Schicht 14, die die Wirkungsweise des Ozonmoduls 1 beeinträchtigt und zu Kurzschlüssen und Ausfall der Ozonproduktion führt.

Eine schematische Darstellung der Schicht 14 auf der oberen Isolierschicht 12 und/-oder der oberen Elektrode 11 eines Ozonmoduls 1, ist in Draufsicht in Fig. 1c dargestellt und im Schnitt entlang der Linie A - A von Fig. 1 c in Fig. 1 d dargestellt.

Aufgabe der vorliegenden Erfindung ist daher eine Anordnung und Vorrichtung für ein Ozonerzeugungsmittel und insbesondere für ein Ozonmodul insbesondere für ein Luftaufbereitungsgerät und insbesondere für ein Luftreinigungsgerät anzugeben, die Ablagerungen auf dem Ozonmodul und insbesondere die Ablagerung von Ammoniumnitrat wesentlich vermindern bzw. verhindern.

Die Aufgabe wird mit den Merkmalen von Anspruch 1 gelöst. Vorteilhafte Ausführungen der vorliegenden Erfindung sind in den Unteransprüchen und/oder der nachfolgenden Beschreibung erwähnt, die von schematischen Zeichnungen begleitet ist. Hierzu zeigt:
Fig. 1a eine schematische Seitenansicht eines herkömmlichen Ozonmoduls;
Fig. 1 b eine schematische Draufsicht auf das Ozonmodul von Fig. 1a;
Fig. 1 c das Ozonmodul von Fig. 1 a und b mit unerwünschten Ablagerungen von insbesondere Ammoniumnitrat;
Fig. 1 d einen schematischen Schnitt durch das Ozonmodul entlang der Linie A-A von Fig. 1c;
Fig. 2a eine schematische Darstellung einer erfindungsgemäßen Anordnung und /oder Vorrichtung zur Vermeidung von Ablagerungen und insbesondere von Ammoniumnitrat auf einem Ozonerzeugungsmittel;
Fig. 2b eine schematische Darstellung einer erfindungsgemäßen Anordnung und /oder Vorrichtung zur Vermeidung von Ablagerungen und insbesondere von Ammoniumnitrat auf einem Ozonerzeugungsmittel nach einer weiteren vorteilhaften Ausführung der vorliegenden Erfindung;
Fig. 2c eine Seitenansicht der Anordnung von Fig. 2b;
Fig. 2d eine Abwandlung der Anordnung von Fig. 2c.

Fig. 3a eine schematische Darstellung einer erfindungsgemäßen Anordnung und /oder Vorrichtung zur Vermeidung von Ablagerungen und insbesondere von Ammoniumnitrat auf einem Ozonerzeugungsmittel nach einer weiteren vorteilhaften Ausführung der vorliegenden Erfindung; und

Fig. 3b einen Schnitt durch die Linie A - A von Fig. 3a.

Grundgedanke der vorliegenden Erfindung ist, daß obwohl die Bildung obiger Stoffe in feuchter Luft nicht unterbunden werden kann, jedoch die oben beschriebene Kristallisation von Ammoniumnitrat auf dem Ozonerzeugungsmittel verhindert werden kann, wenn das Ozonerzeugungsmittel und / oder die Umgebungsluft des Ozonerzeugungsmittels ausreichend erwärmt wird. Aufgrund des niedrigen Partialdrucks obiger Stoffe in der Gasphase ist hierzu keine Temperatur des Schmelz- oder Siedepunkts dieser Stoffe erforderlich. Eine zu hohe Temperatur sollte auch aus anderen Gründen vermieden werden. Zum einen verringert sich der Wirkungsgrad der Ozonproduktion mit steigender Temperatur, zum anderen werden Schmutzpartikel pyrolysiert. Die Temperatur sollte daher derart gewählt werden, dass eine Sublimation obiger Stoffe gesichert ist ohne die Luft unnötig zu erhitzen.

Erfindungsgemäß wird daher eine Anordnung und / oder Vorrichtung zur Vermeidung von Ablagerungen und insbesondere von Ammoniumnitrat auf einem Ozonerzeugungsmittel insbesondere für ein Luftaufbereitungsgerät bereitgestellt, wobei ein Heizmittel für das Ozonerzeugungsmittel und/oder für die Umgebungsluft des Ozonerzeugungsmittels vorgesehen ist, das wenigstens eine Oberfläche des Ozonerzeugungsmittels und / oder die Umgebungsluft des Ozonerzeugungsmittels auf eine, Temperatur aufheizt, so daß Ablagerungen von insbesondere Ammoniumnitrat auf der Oberfläche des Ozonerzeugungsmittels weitestgehend vermieden werden.

Das Ozonerzeugungsmittel kann insbesondere ein Ozonmodul sein, das nach der Funktion der dielektrisch behinderten elektrischen Entladung arbeitet, wobei das Heizmittel vorteilhaft ein Heizwiderstand sein kann, der auf der Oberfläche des Ozonmoduls und/oder in dem Träger des Ozonmoduls vorgesehen sein kann.

Die erfindungsgemäße Anordnung und / oder Vorrichtung zur Vermeidung von Ablagerungen von insbesondere Ammoniumnitrat auf einem Ozonerzeugungsmittel kann insbesondere vorteilhaft in einem Luftaufbereitungsgerät angeordnet sein kann, wobei das Ozonerzeugungsmittel auf geeignete Weise in einem Luftstrom des Geräts angeordnet ist, und das Heizmittel derart in dem Luftstrom des Geräts und relativ zu dem Ozonerzeugungsmittel angeordnet ist, daß eine Oberfläche des Ozonerzeugungsmittels und / oder die Umgebungsluft des Ozonerzeugungsmittels auf eine Temperatur gebracht ist, so daß Ablagerungen von insbesondere Ammoniumnitrat auf der Oberfläche des Ozonerzeugungsmittels weitestgehend vermieden sind.

Die vorliegende Erfindung wird nachfolgend anhand der Zeichnungen 2a bis 2b detailliert beschrieben.

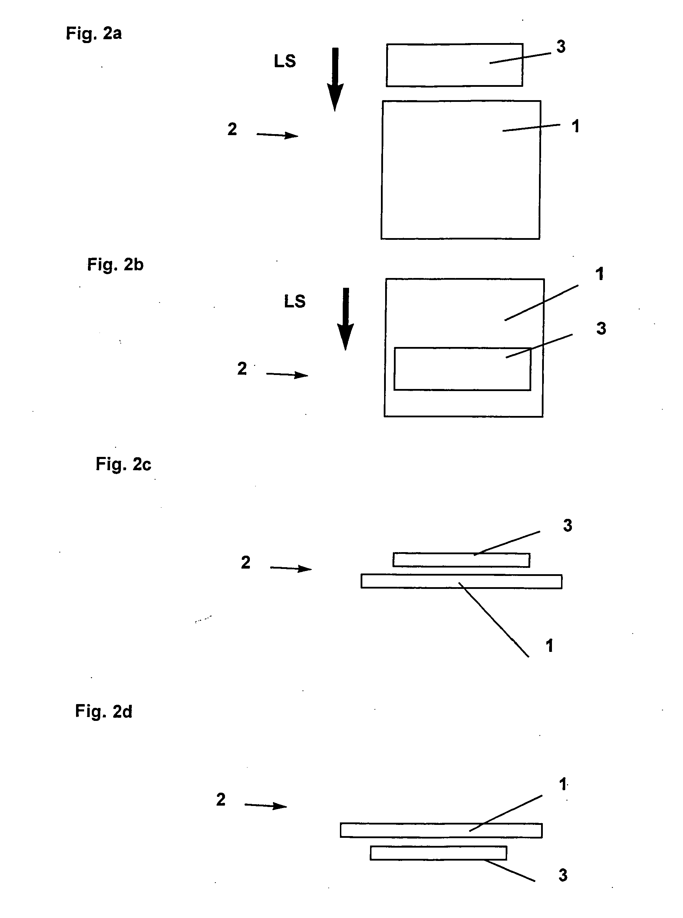

Fig. 2a zeigt eine schematische Darstellung einer ersten erfindungsgemäßen Vorrichtung und / oder Anordnung 2 mit einem Ozonerzeugungsmittel 1 und einem Heizmittel 3, die vorteilhaft innerhalb eines Luftstroms LS insbesondere eines Luftaufbereitungsgeräts angeordnet sind. Erfindungsgemäß sind das Heizmittel 3 und das Ozonerzeugungsmittel 1 relativ derart zueinander und innerhalb des Luftstroms LS des Geräts angeordnet, daß zumindest ein Teilbereich einer Oberfläche des Ozonerzeugungsmittels 1 und / oder die Umgebungsluft des Ozonerzeugungsmittels 1 derart mittels dem Heizmittel 3 aufgeheizt ist, daß Ablagerungen von insbesondere Ammoniumnitrat auf der Oberfläche des Ozonerzeugungsmittels 1 weitestgehend vermieden sind. Das Ozonerzeugungsmittel 1 kann eine beliebige Form haben und beispielsweise wie in Fig. 2a etwa quadratisch sein. Das Heizmittel 3 kann ein beliebiges Heizmittel 3 sein, das geeignet ist das Ozonerzeugungsmittel 1 und / oder die Umgebungsluft des Ozonerzeugungsmittels 1 auf eine Temperatur zu bringen, so daß Ablagerungen von insbesondere Ammoniumnitrat auf der Oberfläche des Ozonerzeugungsmittels 1 weitestgehend vermieden sind.

Fig. 2b zeigt eine schematische Draufsicht auf eine Vorrichtung und / oder Anordnung 2 gemäß einer weiteren Ausführung der vorliegenden Erfindung, mit einem Heizmittel 3 und einem Ozonerzeugungsmittel 1, die wie bei der Ausführung von Fig. 2a innerhalb eines Luftstroms LS insbesondere eines Luftaufbereitungsgeräts angeordnet sind. Im Unterschied zu der oben beschriebenen Ausführung von Fig. 2a kann bei der Ausführung von Fig. 2b das Heizmittel 3 vorteilhaft direkt auf bzw. über oder unter auf dem Ozonerzeugungsmittel 1 angeordnet sein, was jeweils schematisch in Fig. 2c und d dargestellt ist.

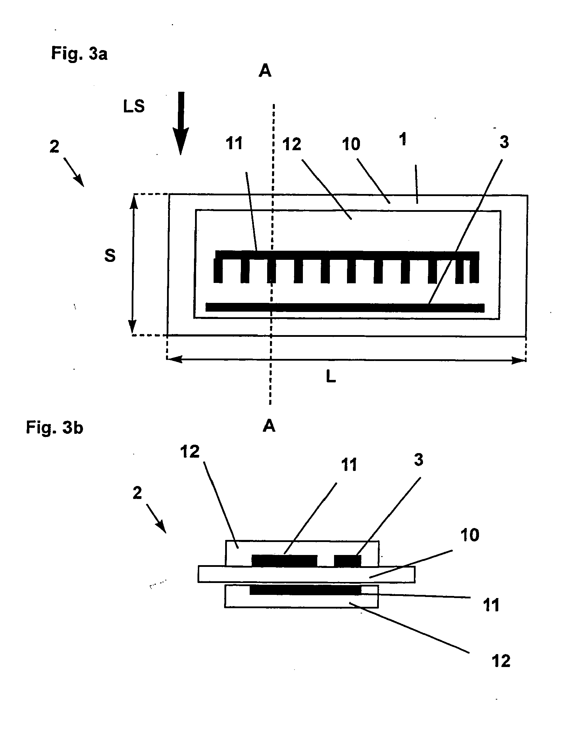

Fig. 3a zeigt eine schematische Draufsicht auf eine Vorrichtung und / oder Anordnung 2 gemäß einer weiteren Ausführung der vorliegenden Erfindung, mit einem Heizmittel 3 und einem Ozonerzeugungsmittel 1, die wie bei der Ausführung von Fig. 2a und 2b innerhalb eines Luftstroms LS insbesondere eines Luftaufbereitungsgeräts angeordnet sind. Erfindungsgemäß sind das Heizmittel 3 und das Ozonerzeugungsmittel 1 bei der Ausführung von Fig. 2a und b ebenfalls relativ derart zueinander und innerhalb des Luftstroms LS des Geräts angeordnet, daß zumindest ein Teilbereich einer Oberfläche des Ozonerzeugungsmittels 1 derart mittels dem Heizmittel 3 aufgeheizt ist, daß Ablagerungen von insbesondere Ammoniumnitrat auf der Oberfläche des Ozonerzeugungsmittels 1 vermieden sind.

Erfindungsgemäß umfasst die Ausführung von Fig. 3a ein Ozonmodul 1, das nach der Funktion der dielektrisch behinderten elektrischen Entladung arbeitet, mit einem Träger 10 und einer unteren und oberen Elektrode 11, die von einer Isolierschicht 12 bedeckt sein können. Das Ozonmodul 1 ist geeigneter weise in Form eines flachen Plättchens ausgebildet, mit einer Längsseite L und einer Schmalseite S, die deutlich kürzer als die Längsseite L ist, wobei das Ozonmodul 1 außerdem das Heizmittel 3 umfasst, das vorteilhaft als Heizwiderstand ausgebildet sein kann und auf einer Oberfläche des Ozonmoduls 1 oder zumindest teilweise innerhalb des Ozonmoduls 1 angeordnet sein kann.

Die vorteilhafte Ausführung der Erfindung gemäß Fig. 3a umfasst außerdem geeigneter Weise eine zahnartig ausgebildete obere Elektrode 11 deren Entladungszähne in Richtung des Luftstroms LS angeordnet sind.
Bei der vorteilhaften Ausführung der Erfindung von Fig. 2b ist das Ozonmodul 1 mit dem Heizmittel 3 außerdem derart relativ zueinander und relativ zu dem Luftstrom LS insbesondere in einem Luftaufbereitungsgerät angeordnet, daß das Heizmittel 3 an der Entladungsseite des Ozonmoduls 1 angeordnet ist und außerdem die Entladungsseite des Ozonmoduls 1 dem Luftstrom abgewandt angeordnet ist. Das Ozonerzeugungsmittel 1 der Ausführung von Fig. 3a kann außerdem vorteilhaft zumindest eine Deckschicht 12 umfassen, die die obere zahnartig ausgebildete Elektrode 3 bedeckt.

Fig. 3b zeigt einen Schnitt durch die vorteilhafte Ausführung der Erfindung gemäß Fig. 3a entlang der Linie A - A von Fig. 3a, wobei die obere Elektrode 11 vorteilhaft zusammen mit dem Heizmittel 3 in einer Ebene auf dem Träger 10 angeordnet sind und von der Deckschicht 12 bedeckt werden. Es ist klar, daß nach einer Abwandlung der Ausführung von Fi. 3a und b das Heizmittel 3 auch auf der Deckschicht 12 angeordnet sein kann und von einer weiteren Deckschicht bedeckt sein kann.

Es ist klar, daß das Heizmittel 3 derart ausgebildet und angeordnet ist, daß das Ozonerzeugungsmittel 1 und / oder die Umgebungsluft des Ozonerzeugungsmittels 1 auf eine vorbestimmte Temperatur gebracht wird, so daß Ablagerungen von insbesondere Ammoniumnitrat auf der Oberfläche des Ozonerzeugungsmittels 1 und/oder Nachverbrennungen weitestgehend vermieden sind, und das Ozonerzeugungsmittel 1 durch die erhöhte Temperatur nicht in seiner Funktion oder Lebensdauer beeinträchtigt ist.

### Bezugszeichenliste

| | |
|---|---|
| Ozonerzeugungsmittel | 1 |
| Träger | 10 |
| Elektrode | 11 |
| Isolierschicht | 12 |
| Vorrichtung und Anordnung zur Vermeidung von | |
| Ablagerungen | 2 |
| Heizmittel | 3 |
| Luftstrom | LS |

## Patentansprüche

1. Vorrichtung und / oder Anordnung (2) zur Vermeidung von Ablagerungen von insbesondere Ammoniumnitrat mit einem Ozonerzeugungsmittel (1) und einem Heizmittel (3), die relativ derart zueinander und innerhalb eines Luftstroms LS eines Geräts angeordnet sind, daß zumindest ein Teilbereich einer Oberfläche des Ozonerzeugungsmittels (1) und / oder die Umgebungsluft des Ozonerzeugungsmittels (1) derart mittels dem Heizmittel (3) aufgeheizt ist, daß Ablagerungen von insbesondere Ammoniumnitrat auf der Oberfläche des Ozonerzeugungsmittels (1) vermieden sind.

2. Vorrichtung und / oder Anordnung (2) nach Anspruch 1, wobei:
das Ozonerzeugungsmittel (1) umfasst ein Ozonmodul, das nach der Funktion der dielektrisch behinderten elektrischen Entladung arbeitet.

3. Vorrichtung und / oder Anordnung (2) nach Anspruch 1 oder 2, wobei:
das Ozonmodul umfasst außerdem das Heizmittel (3).

4. Vorrichtung und / oder Anordnung (2) nach einem der Ansprüche 1 bis 3, wobei:
das Heizmittel (3) ist als Heizwiderstand ausgebildet.

5. Vorrichtung und / oder Anordnung (2) nach einem der Ansprüche 1 bis 4, wobei:
das Heizmittel (3) ist auf einer Oberfläche des Ozonmoduls (1) angeordnet.

6. Vorrichtung und / oder Anordnung (2) nach einem der Ansprüche 1 bis 5, wobei:
das Heizmittel (3) ist zumindest teilweise innerhalb des Ozonmoduls (1) angeordnet.

7. Vorrichtung und / oder Anordnung (2) nach einem der Ansprüche 1 bis 6, wobei:
das Ozonmodul (1) und das Heizmittel (3) sind derart relativ zueinander und relativ zu dem Luftstrom (LS) angeordnet, daß das Heizmittel (3) an der Entladungsseite des Ozonmoduls (1) angeordnet ist und außerdem die Entladungsseite des Ozonmoduls (1) dem Luftstrom (LS) abgewandt angeordnet ist.

8. Vorrichtung und / oder Anordnung (2) nach einem der Ansprüche 1 bis 7, wobei:
das Ozonmodul (1) ist in Form eines flachen Plättchens ausgebildet, mit einer Längsseite (L) und einer Schmalseite (S), die kürzer als die Längsseite (L) ist.

9. Vorrichtung und / oder Anordnung (2) nach einem der Ansprüche 2 bis 8, wobei:
die Vorrichtung umfasst eine obere und untere Elektrode (11), die jeweils oberhalb und unterhalb eines Trägers (10) angeordnet sind, und wobei außerdem das Heizmittel (3) zusammen mit der oberen Elektrode (11) in einer Ebene auf dem Träger (10) angeordnet ist, und das Heizmittel (3) und die obere Elektrode (11) von einer Deckschicht (12) bedeckt werden.

10. Vorrichtung und / oder Anordnung (2) nach einem der Ansprüche 1 bis 9, wobei:
das Heizmittel (3) ist derart ausgebildet und angeordnet, daß das Ozonerzeugungsmittel (1) und / oder die Umgebungsluft des Ozonerzeugungsmittels (1) auf eine vorbestimmte Temperatur gebracht ist, so daß Ablagerungen von insbesondere Ammoniumnitrat auf der Oberfläche des Ozonerzeugungsmittels (1) weitestgehend vermieden sind, und das Ozonerzeugungsmittel (1) durch die erhöhte Temperatur nicht in seiner Funktion oder Lebensdauer beeinträchtigt ist.

11. Vorrichtung und / oder Anordnung (2) nach einem der Ansprüche 1 bis 10, wobei:
die Vorrichtung und / oder Anordnung (2) ist innerhalb eines Luftaufbereitungsgeräts angeordnet.
